# EUROPÄISCHE PATENTSCHRIFT

(11) **EP 0 789 313 B1**
(45) Veröffentlichungstag und Bekanntmachung des Hinweises auf die Patenterteilung: **08.01.2003**
(21) Anmeldenummer: 97890019.9
(22) Anmeldetag: 06.02.1997
(51) Int. Cl.: G06K 7/06, G06K 19/02, G06K 7/00

(54) **Vorrichtung zum Reinigen der elektrischen Kontakte eines Chipkartenlesegerätes**
Apparatus for cleaning the electrical contacts of a chipcard reader
Dispositif pour nettoyer des contacts électriques d'un lecteur de carte à puce

(30) Priorität: 08.02.1996 AT 22796
(43) Veröffentlichungstag der Anmeldung: 13.08.1997
(73) Patentinhaber: Krknjak, Alexander, 4873 Frankenburg (AT)
(72) Erfinder: Nutz, Maria, 1220 Wien (AT); Krknjak, Alexander, 4873 Frankenburg (AT); Kautzky, Norbert, 1030 Wien (AT)
(74) Vertreter: Patentanwälte BARGER, PISO & PARTNER

(56) Entgegenhaltungen:
- EP-A- 0 437 938
- EP-A- 0 490 860
- EP-A- 0 677 395

## Beschreibung

Die Erfindung betrifft eine Vorrichtung zum Reinigen der elektrischen Kontakte eines Lesegerätes für Chipkarten- oder Chip-Scheckkarten, vorzugsweise in Bankomaten gemäß dem Oberbegriff des Anspruches 1.

Eine derartige Vorrichtung ist aus der EP 0 677 395 A1 bekannt. Diese Reinigungskarte dient allerdings zum Reinigen des Schlitzes einer Vorrichtung zur Herstellung von Kreditkarten oder Bankomatkarten mit ihren thermischen Prägeköpfen, den Vorrichtungen zum Aufbringen von Farbe oder Beschichtungsmaterial und schließlich den Kontakten für die Programmierung eines Chips oder zum Aufbringen elektrischer Ströme zum Programmieren eines Magnetstreifens. Für die Durchführung der Reinigung sind zwei Reinigungsbereiche vorgesehen, ein großflächiger für die allgemeine Reinigung des Schlitzes und ein wesentlich kleinflächigerer, der im Zuge des Transporters der Reinigungskarte durch den Schlitz nur über die elektrischen Kontakte schleift und sie reinigt. Dieser für die Kontakte vorgesehene Reinigungsbereich kann nach dem einzigen erwähnten Ausführungsbeispiel aus feinkörnigen Schmirgelpapier bestehen. Die Reinigungskarte selbst wird, so wie die in der Vorrichtung hergestellten Kreditkarten, durch alle Stationen durch bewegt und nicht, wie bei Lesegeräten, durch den selben Schlitz wieder zurückbewegt. Für letztere Anwendung ist sie zu Folge des zweiteiligen Aufbaus der Reinigungsbereiche weitgehend ungeeignet.

Die EP 0 437 938 A2 offenbart eine Reinigungsvorrichtung für die Reinigung eines Lesekopfes, welche Vorrichtung eine Unterschicht umfaßt, die auf ihren beiden ebenen Flächen jeweils mit einer Reinigungsvlieslage versehen ist. Die Vorrichtung weist zumindest einen magnetisch codierten Bereich auf, damit sie in eine Lage gebracht werden kann, in der zumindest eine Reinigungsvlieslage den Lesekopf berührt. Es handelt sich hierbei um eine Magnetkarte mit Codierung, damit sie in die Kartenaufnahmeöffnung mechanisch eingezogen werden kann. Die Reinigung des Lesekopfes erfolgt dabei während der Bewegung der karte, wodurch eine Möglichkeit geschaffen wurde, den Lesekopf eines Bankomaten zu reinigen, ohne dass eine gesonderter Zugang zum Lesekopf, beispielsweise durch den Ausbau eines Teils des Bankomaten geschaffen werden muss.

Eine derartige Reinigungsvorrichtung eignet sich jedoch nicht für die Reinigung von Kontakten eines Lesegerätes für Chipkarten oder Chip-Schekkarten. Damit der Chip gelesen werden kann, ist ein Stillstand der Vorrichtung erforderlich, so dass danach entsprechende Arbeitsvorgänge für die Reinigung der Kontakte des Lesegerätes von den Kontakten ausgelöst werden können.

Aufgabe der Erfindung ist nun die Schaffung einer verbesserten Vorrichtung, welche mit einfachen Mitteln die Reinigung von Kontakten eines Lesegerätes für mit einem Chip ausgestatteten Karten ermöglicht.

Diese Ziele werden erfindungsgemäß mit einer Vorrichtung gemäß dem kennzeichnenden Teil des Anspruches 1 erreicht. Vorteilhafte Ausgestaltungen sind in den Unteransprüchen gekennzeichnet.

Eine besondere Ausführung der Erfindung besteht darin, dass der Träger des Reinigungselementes ein unter der Einwirkung von zumindest einer Feder befindlicher; geradlinig bewegbarer oder um eine Achse drehbarer, schieberartiger Teil ist, der in seiner Ausgangsstellung, vorzugsweise verriegelt ist und durch Einwirkung der Kontakte des Lesegerätes entriegelbar ist, so dass der schieberartige Teil sich unter der Wirkung der zumindest einen Feder über die Kontakte des Lesegerätes bewegt. Dabei streicht das Reinigungselement bzw. der Reinigungsbelag infolge seiner entsprechenden Position in der Vorrichtung über die zu reinigenden Kontakte Lesegerät Bankomat.

Eine derart ausgebildete erfindungsgemäße Vorrichtung kommt also durch einfaches Einschieben in den Bankomaten zur Wirkung und bedarf keiner sonstigen Handlung zur Reinigung der Kontakte. Es ist jedoch denkbar, die erfindungsgemäße Vorrichtung dadurch zu vereinfachen, dass auf die den Schieber bewegende Feder verzichtet wird und den Schieber so lang zu machen, dass er von außen durch eine Bedienungsperson bewegt werden kann.

Die Dicke und Breite der erfindungsgemäßen Vorrichtung ist durch den Schlitz des Bankomaten begrenzt. Ihre Teile bestehen daher im wesentlichen aus dünnem, ausreichend festem und korrosionsbeständigem Material, z.B. aus nichtrostendem Edelstahl oder einer Hartaluminiumlegierung mit Federeigenschaften.

Nach einer bevorzugten Ausführung der Erfindung befindet sich ein schieberartiger Teil mit einem darauf befestigten Reinigungselement oder Reinigungsbelag zwischen zwei über einem Abstandhalter miteinander verbundenen Teilen (Gegenhaltern). Der Abstandhalter hat etwa die gleiche Dicke wie der Schieber, so daß dieser zwischen den beiden Gegenhaltern leicht bewegbar ist und vom Abstandhalter seitlich geführt wird.

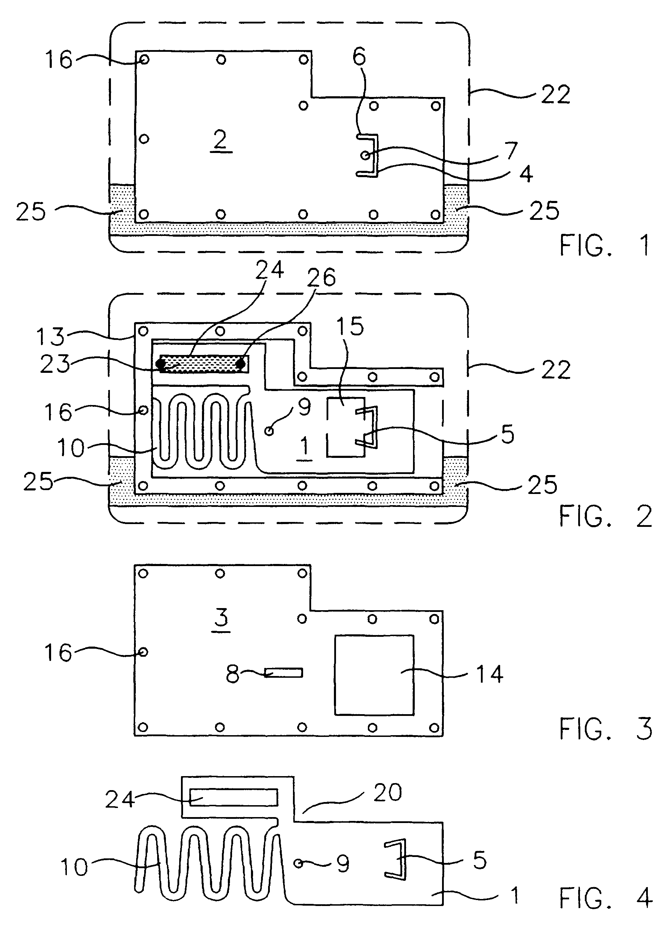

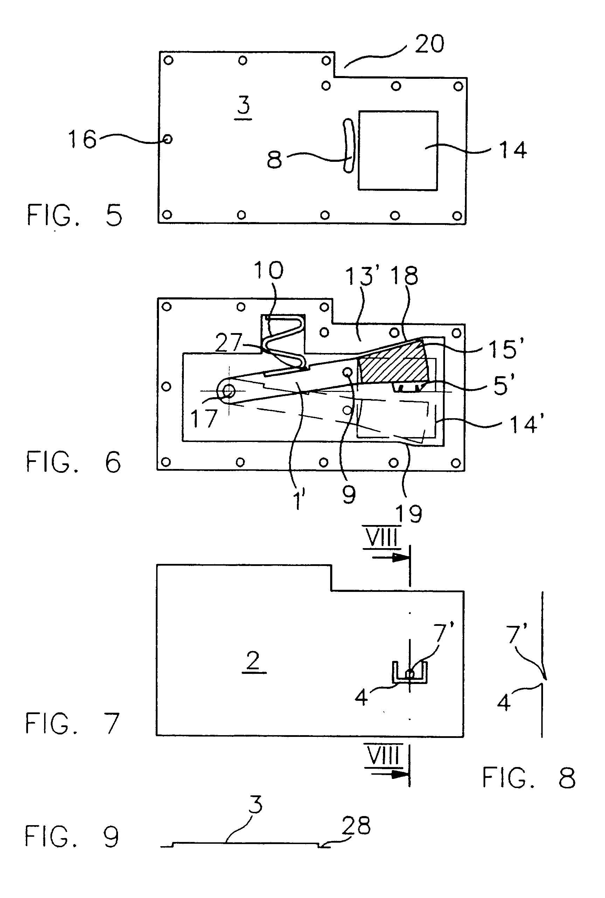

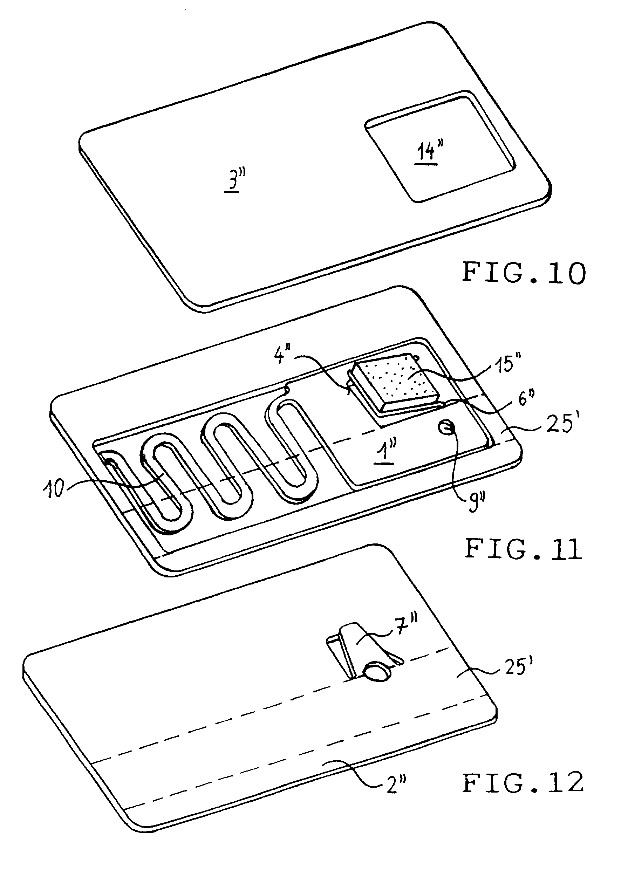

In der Zeichnung ist der Gegenstand der Erfindung schematisch anhand mehrerer Ausführungsformen näher erläutert, worin Fig. 1 eine Draufsicht einer Grundplatte, Fig. 2 eine Draufsicht eines Mittelteils, Fig. 3 eine Draufsicht einer Deckplatte und Fig. 4 eine Detailansicht des Mittelteils der Fig. 2 einer ersten Ausführungsform der erfindungsgemäßen Vorrichtung, Fig. 5 eine Draufsicht einer Deckplatte, Fig. 6 eine Draufsicht eines Mittelteils, Fig. 7 eine Draufsicht einer Grundplatte und Fig. 8 eine Schnittansicht entlang der Linie VIII-VIII der Fig. 7 einer zweiten Asuführungsform der erfindungsgemäßen Vorrichtung, Fig. 9 eine Profilansicht der Deckplatte gemäß Fig. 3 und 5 und Fig. 10 eine Draufsicht einer Deckplatte, Fig. 11 eine Draufsicht eines Mittelteils und Fig. 12 eine Draufsicht einer Grundplatte einer dritten Ausführungsform der erfindungsgemäßen Vorrichtung zeigen.

In Fig. 1 stellt den einen der beiden Gegenhalter dar, der mit 2 bezeichnet ist und der einen aus einem Ausschnitt 6 etwas nach außen gebogenen Lappen mit einer nach innen zeigenden kleinen Aufwölbung (Delle) 7 besitzt. Der Ausschnitt 6 weist eine als Widerlager wirkende Kante 4 auf. Mit 16 sind Nieten zur Verbindung der Gegenhalter bezeichnet. Mit 25 ist der Bereich bezeichnet, in welchem die Codierung angebracht ist. Ein allfälliger Scheckkartenrand ist mit 22 bezeichnet und punktiert ausgeführt. Damit ist angedeutet, daß die Vorrichtung in eine ausgestanzte Scheckkarte eingebaut sein könnte, um so gleich die vorhandene Codierung zu nützen. Fig. 2 zeigt den schieberartigen Teil 1 umrahmt vom Abstandhalter 13, ferner eine Druckfeder 10 und zusätzlich eine Zugfeder (Gummiband) 23, die in einem Ausschnitt 24 des Schiebers 1 untergebracht ist und die mit einem Ende am Schieber und mit dem anderen rechts befindlichen, am darunter liegenden Gegenhalter 2 befestigt ist. Dies ist durch dicke Punkte 26 (Klebestellen) in Fig. 2 angedeutet. Jedoch umfaßt die Erfindung auch Anordnungen, welche nur eine einzige Feder aufweisen. Der Vorteil zweier Federn liegt in der stärkeren Kraftwirkung und der Reserve im Falle eines Bruches einer Feder.

Die hier dargestellte Anordnung sitzt bei zusammengebauter Vorrichtung auf dem in Fig. 1 gezeichneten Gegenhalter 2. Der Schieber 1 besitzt einen Arretierungsteil 5, der gleichsinnig wie der Lappen des Gegenhalters 2 etwas aufgebogen ist, so daß er im arretierten Zustand des Schiebers 1 an dem Widerlager 4 mit seiner Vorderkante anliegt. Hier ist die Druckfeder 10 aus Edelstahl an den Schieber 1 in einem Stück angeformt. Sie könnte aber auch unabhängig davon sein. Im dargestellten arretierten Zustand ist die Druckfeder 10 zusammengedrückt und die Zugfeder 23 gespannt. Die Druckfeder stützt sich gegen den Abstandhalter 13 ab. Anstelle eines eigenen Abstandhalters könnte auch ein solcher durch hochgezogene und umgekantete Ränder 28 des eine Abdeckung bildenden Teiles 3 gebildet werden (Fig. 9). Mit 9 ist ein kleines Loch im Schieber 1 bezeichnet, welches unter dem in Fig. 3 mit 8 bezeichneten Schlitz liegt und es erlaubt, den Schieber mittels eines durchgesteckten Stiftes, z.B. auch mittels eines Kuli's händisch in die verriegelte Ausgangsstellung zurückzuziehen.

In Fig. 3 ist die obere Abdeckung des Schiebers 1 mit 3 bezeichnet. Sie besitzt ein Fenster 14 in Form eines Ausschnittes, in dessen Bereich sich das am Schieber 1 befestigte Reinigungselement 15 befindet und bewegt. Die erfindungsgemäße Vorrichtung wird im Bankomaten wie eine Scheckkarte behandelt und kommt so über die zu reinigenden Kontakte des Bankomaten. Durch den vom Bankomaten ausgeübten Druck wird die Delle 7 gegen den Arretierungslappen 5 gedrückt, wodurch dieser von der Widerlagerkante freikommt, worauf der Schieber sich unter der Wirkung der Federn 10 und 23 in seine andere Endlage bewegt. Dabei streicht das Reinigungselement 15, z.B. ein dünnes Glasfaserflies oder ähnliches oder auch nur ein feinrauher Anstrich am Schieber 1 über die zu reinigenden Kontakte. An die Stelle der mit 13 bezeichneten Vernietung könnte auch eine Verklebung oder Verschweißung eintreten.

Fig. 4 zeigt eine andere Ausführungsmöglichkeit des Schiebers 1 mit angeformter Feder 10. Hier sitzt die Feder 10 an der Unterseite des Schiebers 1 fest, was zur Vermeidung eines Verkantens günstiger ist, wenn zwei Federn vorhanden sind.

Ein Ausschnitt 20 dient nur zum besseren Halt der Vorrichtung, falls sie in eine ausgestanzte Scheckkarte eingesetzt wird.

Wird auf die Scheckkarte verzichtet und die Vorrichtung selbst mit dem nötigen Code versehen, so fällt dieser Ausschnitt 20 weg und der äußere Umriß der Vorrichtung gleicht dem einer Scheckkarte (Fig. 10 bis 12). Dieser Umriß ist in den Fig. 1 und 2 mit 22 bezeichnet.

In den Fig. 5 bis 7 ist eine weitere beispielsweise Ausführungsform der Erfindung dargestellt. Hierbei ist an Stelle eines geradlinig bewegbaren schieberartigen Teiles 1 ein um eine Achse 17 schwenkbarer Teil 1' vorgesehen, der an seinem einen äußeren Bereich ein Reinigungselement 15' trägt und der eine Einkerbung 27 aufweist, in die eine Druckfeder 10 eingreift, die sich gegen den Abstandhalter 13' abstützt. In der in Fig. 6 gezeigten Stellung des Drehschiebers 1' ist dieser verriegelt. Sein Arretierungsteil 5' liegt an der Kante 4 des Widerlagers (Fig. 7) am Gegenhalter 2 an. Im Teil 3 befindet sich wieder ein kleiner Schlitz 8' in Bewegungsrichtung des Schiebers, also hier bogenförmig ausgebildet, durch den ein Stift gesteckt werden kann, um den Schieber zurückzustellen. Unter diesem Schlitz 8' befindet sich im Drehschieber 1' wieder eine kleine Bohrung 9 od.dgl., in die der Stift eingreifen kann.
Der Teil 2 (Fig. 7) ist unter dem Drehschieber 1' zu denken und der Teil 3 über dem Schieber 1' (Fig. 6).

Die Fig. 8 zeigt einen Schnitt des Teiles 2 entlang der Linie VIII - VIII in Fig. 7. An einer Aufwölbung 7' liegt der Arretierungsteil 5' bei zusammengebauter Vorrichtung an, wenn der Drehschieber 1' in der dargestellten Lage ist (Fig. 6). Dabei stützt sich die vordere Kante des aufgebogenen Arretierungsteiles 5' an der Kante 4 (Widerlagerkante) ab. Wird auf den Lappen mit der Aufwölbung 7' durch den Bankomaten eine Druckkraft ausgeübt, so wird der Arretierungsteil 5' von der Widerlagerkante 4 weggedrückt und der Drehschieber 1' bewegt sich unter der Wirkung der Feder 10 und einer allfälligen Zugfeder 23 (z.B. ein Gummiband) in seine andere Endlage, die durch den Anschlag am Abstandhalter festliegt. Dabei streicht sein Reinigungselement 15' über die unter einem Fenster 14' befindlichen zu reinigenden Kontakte des Chipkartenlesegerätes bzw. Bankomaten. Dieses Fenster 14' ist in Fig. 6 strichliert angedeutet, befindet sich aber im Teil 3 (Fig. 5).

Fig. 9 zeigt den Teil 3 im Querschnitt im Falle er gleichzeitig mit den Rändern 28 den Abstandhalter darstellt, der damit als eigenständiger Teil entfällt.

Fig. 10 bis 12 zeigen eine dritte Ausführungsform der erfindungsgemäßen Vorrichtung. Vorliegendenfalls hat sie die Form einer Scheckkarte und ist mit der nötigen Codierung 25' versehen. Die Deckplatte 3" bildet den oberen Gegenhalter und ist in analoger Weise entsprechend Fig. 3 und 5 mit einem Fenster 14" und in nicht dargestellter Weise mit einem Schlitz versehen. Entsprechend Fig. 1 aber in unterschiedlicher Anordnung ist die den anderen Gegenhalter bildende Grundplatte 2" mit einem Lappen 7" versehen, der nach oben aufgebogen ist.
Wie in Fig. 11 gezeigt ist der Schieber 1" mit einem Widerlager 4" und einem Lappen 6" ausgestattet, der das Reinigungselement 15" trägt und gleichsinnig wie der Lappen 7" die Grundplatte 2" aufgebogen ist. In der arretierten Stellung des Schiebers 1" liegt der Lappen 7" am Widerlager 4" an und drückt gegen den Lappen 6". Gleichzeitig wird der Lappen 7" vom Widerlager 4" weggedrückt, so daß der Schieber 1" entarretiert und mittels der Feder 10 in die in Fig. 11 dargestellte Lage verschoben wird. Durch Eingriff mit einem Stift od. dgl. in das Loch 9" ist die arretierte, vorgespannte Lage des Schiebers 1" wieder herstellbar.

Es ist klar, daß es noch verschiedene andere Ausführungsmöglichkeiten einer derartigen Vorrichtung im Rahmen der Erfindung gibt. So könnte der Drehschieber 1 auch kreisringförmig oder kreisförmig sein, angetrieben mit einer Spiralfeder (vorzugsweise hergestellt, wie die in Fig. 4 dargestellte Druckfeder 10), so daß der Reinigungsteil auch einige Rotation ausüben könnte, soferne die Anordnung der Kontakte im Bankomaten dies erlaubt.

## Patentansprüche

1. Vorrichtung zum Reinigen der elektrischen Kontakte eines Lesegerätes für Chipkarten- oder Chip-Scheckkarten, vorzugsweise in Bankomaten, wobei die Außenmaße der Vorrichtung so bemessen sind, daß sie in den Schlitz des Lesegerätes einführbar ist, wobei sie gegebenenfalls mit einer Codierung versehen ist, und welche Vorrichtung ein Reinigungselement (15,15',15") umfaßt, das über die Kontakte des Lesegerätes bewegbar ist, **dadurch gekennzeichnet, daß** die Vorrichtung zwei zueinander bewegliche Teile aufweist, wobei ein erster Teil ein Gegenhalter (2,2'2") für einen zweiten Teil (1,1',1") ist, der schieberartig ausgebildet ist und das Reinigungselement (15,15',15") trägt.

2. Vorrichtung nach Anspruch 1, **dadurch gekennzeichnet, daß** der schieberartige Teil (1,1',1") unter der Einwirkung von zumindest einer Feder (10, 23) steht und entweder geradlinig bewegbar oder um eine Achse (17) drehbar ist, daß er in seiner Ausgangsstellung vorzugsweise verriegelt und durch Einwirkung der Kontakte des Lesegerätes entriegelbar ist, so daß der schieberartige Teil (1, 1', 1") sich unter der Wirkung der zumindest einen Feder (10, 23) über die Kontakte des Lesegerätes bewegt.

3. Vorrichtung nach Anspruch 1 oder 2, **dadurch gekennzeichnet, daß** der schieberartige Teil (1) zwischen zwei miteinander über einen Abstandhalter (13) od.dgl. verbundenen Teilen (2, 3) sitzt, deren einer ein Widerlager (4) für einen am schieberartigen Teil (1) befindlichen Arretierungsteil (5) trägt und deren anderer (3) als Gegenhalter für den schieberartigen Teil (1) dient.

4. Vorrichtung nach Anspruch 3, **dadurch gekennzeichnet, daß** einer der beiden außen befindlichen Teile (2, 3) an den Rändern zumindest teilweise hochgezogen und umgekantet ist und so den Abstandhalter bildet.

5. Vorrichtung nach einem der Ansprüche 2 bis 4, **dadurch gekennzeichnet, daß** der schieberartige Teil (1) aus korrosionsbeständigem federndem Material, vorzugsweise Edelstahlblech besteht und daß der aus der Hauptebene dieses Teiles (1) etwas herausgebogene Arretierungsteil (5) mit einem vorzugsweise als Kante eines Ausschnittes (6) ausgebildeten Widerlager (4) am Gegenhalter (3) zusammenwirkt.

6. Vorrichtung nach Anspruch 5, **dadurch gekennzeichnet, daß** die der Widerlagerkante gegenüberliegende Seite desselben Ausschnittes (6) bzw. der Ausstanzung ein Entriegelungselement bildet und in gleicher Richtung wie der Arretierungsteil (5) aus der Hauptebene herausgebogen ist und vorzugsweise eine kleine, am aufgebogenen Arretierungsteil (5) anliegende Aufwölbung oder Delle (7) trägt.

7. Vorrichtung nach einem oder mehreren der Ansprüche 2 bis 6, **dadurch gekennzeichnet, daß** der den schieberartigen Teil (1) haltende Teil (3) einen in Bewegungsrichtung des Schiebers od.dgl. verlaufenden Schlitz (8) aufweist, unter dem der schieberartige Teil (1) eine kleine Bohrung oder einen kurzen Schlitz (9) besitzt, welcher zur händischen Rückstellung des schieberartigen Teiles (1) in seine Ausgangsstellung dient.

8. Vorrichtung nach einem der Ansprüche 3 bis 7, **dadurch gekennzeichnet, daß** der das Widerlager aufweisende Gegenhalter (2) aus federndem Material, vorzugsweise nicht rostendem Stahlblech besteht.

9. Vorrichtung nach einem oder mehreren der Ansprüche 2 bis 8, **dadurch gekennzeichnet, daß** eine zur Betätigung des Schiebers (1) dienende Feder (10) eine mäanderförmig ausgebildete flache Druckfeder ist.

10. Vorrichtung nach einem oder mehreren der Ansprüche 2 bis 9, **dadurch gekennzeichnet, daß** eine Feder eine Zugfeder, z.B. ein Gummiband ist und mit einem Ende am Schieber (1) und mit dem anderen an einem der Außenteile (2, 3) befestigt, vorzugsweise angeklebt ist.

11. Vorrichtung nach einem der Ansprüche 2 bis 10, **dadurch gekennzeichnet, daß** der Träger des Reinigungselementes (15) verdrehbar angeordnet ist und hierfür eine Druckfeder (10) oder eine Spiralfeder vorgesehen ist.

12. Vorrichtung nach einem oder mehreren der Ansprüche 1 bis 11, **dadurch gekennzeichnet, daß** der eine Gegenhalter, d.h. Außenteil (3) einen Ausschnitt bzw. Fenster (14) aufweist, in dessen Bereich das Reinigungselement bewegbar ist.

13. Vorrichtung nach einem der Ansprüche 2 bis 12, **dadurch gekennzeichnet, daß** der schieberartige Teil (1) zusammen mit mindestens einer Feder (10) im Raum zwischen den beiden äußeren Gegenhaltern (2, 3) angeordnet ist.

14. Vorrichtung nach Anspruch 13, **dadurch gekennzeichnet, daß** der schieberartige Teil (1) an dem einen der beiden außen liegenden Gegenhalter (2, 3) verschieblich befestigt ist, z.B. in Schlitze desselben eingreift.

15. Vorrichtung nach einem der Ansprüche 2 bis 13, **dadurch gekennzeichnet, daß** eine Feder (10) am schieberartigen Teil (1) selbst angeformt ist.

16. Vorrichtung nach Anspruch 15, **dadurch gekennzeichnet, daß** eine Feder (10) flach und mäanderförmig ausgebildet ist.

17. Vorrichtung nach Anspruch 10, **dadurch gekennzeichnet, daß** die als elastisches Band ausgebildete Feder (23) in einem seitlichen Ausschnitt (24) des schieberartigen Teiles (1) untergebracht ist.

18. Vorrichtung nach einem der Ansprüche 3 bis 17, **dadurch gekennzeichnet, daß** der Abstandhalter (13) als Führung für den schieberartigen Teil (1) dient.

19. Vorrichtung nach Anspruch 11, **dadurch gekennzeichnet, daß** der schieberartige Teil (1) als Drehhebel ausgebildet ist, der im Endbereich ein Reinigungselement trägt und der im wesentlichen quer zur Längsausdehnung der Vorrichtung um etwa 20 bis 30 Grad verschwenkbar ist.

20. Vorrichtung nach Anspruch 19, **dadurch gekennzeichnet, daß** der Drehhebel mittels einer flachen Druckfeder (10) gegen den Abstandhalter abgestützt ist und daß in seinem äußeren Bereich ein Arretierungselement (5) angeordnet ist, das mit einem Widerlager (4) des einen Gegenhalters (2) zusammenwirkt.

21. Vorrichtung nach Anspruch 19, **dadurch gekennzeichnet, daß** zum Antrieb des Drehhebels an Stelle einer Druckfeder (10) eine Spiralfeder angeordnet ist.

22. Vorrichtung nach Anspruch 1, **dadurch gekennzeichnet, daß** der das Reinigungselement tragende schieberartige Teil so lang ausgebildet ist, daß er aus dem Schlitz des Lesegerätes ragt und von außen durch eine Bedienerperson bewegt werden kann.

## Claims

1. Device for cleaning the electrical contacts of a reading unit for smart cards or smart cash cards, preferably in cash machines, wherein the exterior dimensions of the device are so set that it can be introduced into the slot of the reading device, wherein, if necessary, it is provided with a coding and which device comprises a cleaning element (15, 15',15") which is movable over the contacts of the reading device, **characterised in that** the device has two parts movable relative to one another, wherein a first part is a counter support (2, 2', 2") for a second part (1, 1', 1") which is constructed like a slider and which carries the cleaning element (15, 15',15").

2. Device according to Claim 1, **characterised in that** the carrier of the cleaning element (15, 15', 15") is a slider-like part (1, 1', 1") movable in a straight line or rotatable about an axis (17) arranged under the action of at least one spring (10, 23) which, in its starting position, is preferably locked and is unlockable by the action of the contacts of the reading device, so that the slider-like part (1, 1', 1") moves under the action of at least one spring (10, 23) across the contacts of the reading device.

3. Device according to Claim 1 or 2, **characterised in that** the slider-like part (1) is set between two parts (2, 3) connected with one another via a distance piece (13) or the like, of which one carries a counter bearing (4) for a locking part (5) located on the slider-like part (1) and the other (3) serves as a counter support for the slider-like part (1).

4. Device according to Claim 3, **characterised in that** one of the two parts (2, 3) located on the outside is at least partly elevated on its edges and curved round and thus forms the distance piece.

5. Device according to one of Claims 2 to 4, **characterised in that** the slider-like part (1) consists of corrosion resistant resilient material, preferably stainless steel sheet, and that the locking part (5) somewhat bent out from the main plane of this part (1) cooperates with a counter bearing (4) constructed preferably as the edge of a cutout (6) on the counter support (3).

6. Device according to Claim 5, **characterised in that** the side lying opposite the counter bearing edge of the same cutout (6) or the stamping out constitutes an unlocking element and is bent out in the same direction as the locking part (5) from the main plane and preferably carries a little arching or dent (7) lying against the bent up locking part (5).

7. Device according to one or several of Claims 2 to 6, **characterised in that** the part (3) holding the slider-like part (1) has a slot (8) running in the direction of movement of the slider or the like, below which the slider-like part (1) has a small bore or a short slot (9) which serves for the manual return of the slider-like part (1) into its starting position.

8. Device according to one of Claims 3 to 7, **characterised in that** the counter support (2) having the counter bearing consists of resilient material, preferably non-rusting steel sheet.

9. Device according to one or several of Claims 2 to 8, **characterised in that** a spring (10) serving for actuation of the slider (1) is a flat compression spring constructed in a meander shape.

10. Device according to one or several of Claims 2 to 9, **characterised in that** a spring is a tension spring, e.g. a rubber band and is fixed preferably adhesed with one end to the slider (1) and with the other to one of the exterior parts (2, 3).

11. Device according to one of Claims 2 to 10, **characterised in that** the carrier of the cleaning element (15) is arranged rotatably and for this a compression spring (10) or a spiral spring is provided.

12. Device according to one or several of Claims 1 to 11, **characterised in that** the one counter support, i.e. outer part (3), has a cutout or window (14) in the region of which the cleaning element is movable.

13. Device according to one of Claims 2 to 12, **characterised in that** the slider-like part (1) is arranged together with at least one spring (10) in the space between both the outer counter supports (2, 3).

14. Device according to Claim 13, **characterised in that** the slider-like part (1) is fixed slidably against one of both of the externally lying counter supports (2, 3), e.g. engages in slots in the same.

15. Device according to one of Claims 2 to 13, **characterised in that** a spring (10) is itself formed on the slider-like part (1).

16. Device according to Claim 15, **characterised in that** a spring (10) is formed flat and meander shaped.

17. Device according to Claim 10, **characterised in that** the spring (23) constructed as an elastic band is installed in a lateral cutout (24) of the slider-like part (1).

18. Device according to one of Claims 3 to 17, **characterised in that** the distance piece (13) serves as a guide for the slider-like part (1).

19. Device according to Claim 11, **characterised in that** the slider-like part (1) is constructed as a rotatable lever which carries a cleaning element in its end region and which is swivellable essentially transverse to the longitudinal extent of the device through around 20 to 30 degrees.

20. Device according to Claim 19, **characterised in that** the rotatable lever is supported by means of a flat compression spring (10) against the distance piece and that arranged in its outer region is a locking element (5) which cooperates with a counter bearing (4) of one of the counter supports (2).

21. Device according to Claim 19, **characterised in that** for driving the rotatable lever in place of compression spring (10), a spiral spring is arranged.

22. Device according to Claim 1, **characterised in that** the slider-like part carrying the cleaning element is constructed so long that it projects out of the slot of the reading unit and can be moved from outside by an operative.

## Revendications

1. Dispositif pour nettoyer les contacts électriques d'un lecteur de cartes à puce ou de cartes-chèques à puce, de préférence dans des guichets automatiques bancaires, les dimensions extérieures du dispositif étant telles qu'il peut être inséré dans la fente du lecteur, lequel dispositif, le cas échéant pourvu d'un codage, comprend un élément de nettoyage (15, 15', 15") qui est mobile au-dessus des contacts du lecteur, **caractérisé par le fait que** le dispositif présente deux pièces mobiles l'une par rapport à l'autre, une première pièce étant un contre-support (2, 2', 2") pour une deuxième pièce (1, 1', 1") qui est conçue sous forme de coulisseau et porte l'élément de nettoyage (15, 15', 15").

2. Dispositif selon la revendication 1, **caractérisé par le fait que** le support de l'élément de nettoyage (15, 15', 15") est une pièce de type coulisseau (1, 1', 1") soumise à l'action d'au moins un ressort (10, 23), mobile suivant une ligne droite ou pivotant autour d'un axe (17), qui est de préférence verrouillée dans sa position initiale et déverrouillable par l'action des contacts du lecteur, de sorte que la pièce de type coulisseau (1, 1', 1") se déplace sous l'effet du ou des ressort(s) (10, 23) au-dessus des contacts du lecteur.

3. Dispositif selon la revendication 1 ou 2, **caractérisé par le fait que** la pièce de type coulisseau (1) est logée entre deux pièces (2, 3) reliées entre elles par une pièce d'écartement (13) ou analogue, dont la première porte une butée (4) pour une pièce d'arrêt (5) située sur la pièce de type coulisseau (1) et dont l'autre (3) sert de contre-support pour la pièce de type coulisseau (1).

4. Dispositif selon la revendication 3, **caractérisé par le fait que** l'une des deux pièces extérieures (2, 3) est au moins partiellement relevée et retournée sur les bords, formant ainsi la pièce d'écartement.

5. Dispositif selon l'une des revendications 2 à 4, **caractérisé par le fait que** la pièce de type coulisseau (1) est en matériau élastique résistant à la corrosion, de préférence en tôle d'acier spécial et que la pièce d'arrêt (5) légèrement redressée par rapport au plan principal de cette pièce (1) agit en combinaison avec une butée (4) de préférence conçue comme arête d'une entaille (6) du contre-support (3).

6. Dispositif selon la revendication 5, **caractérisé par le fait que** le côté opposé à l'arête de butée de ladite entaille (6) ou de la découpe forme un élément de déverrouillage et est redressé dans la même direction que la pièce d'arrêt (5) par rapport au plan principal et porte de préférence un petit renflement ou une petite bosse (7) en appui contre la pièce d'arrêt (5) recourbée.

7. Dispositif selon une ou plusieurs des revendications 2 à 6, **caractérisé par le fait que** la pièce (3) maintenant la pièce de type coulisseau (1) présente une fente (8) dans la direction de déplacement du coulisseau ou analogue, sous laquelle la pièce de type coulisseau (1) possède un petit trou ou une courte fente (9) servant à remettre manuellement la pièce de type coulisseau (1) dans sa position initiale.

8. Dispositif selon l'une des revendications 3 à 7, **caractérisé par le fait que** le contre-support (2) comportant la butée est en matériau élastique, de préférence en tôle d'acier inoxydable.

9. Dispositif selon une ou plusieurs des revendications 2 à 8, **caractérisé par le fait qu'**un ressort (10) servant à actionner le coulisseau (1) est un ressort de compression plat méandriforme.

10. Dispositif selon une ou plusieurs des revendications 2 à 9, **caractérisé par le fait qu'**un ressort est un ressort de traction, p. ex. un ruban élastique, qui est fixé, de préférence collé, par une extrémité au coulisseau (1) et par l'autre à une des pièces extérieures (2, 3).

11. Dispositif selon l'une des revendications 2 à 10, **caractérisé par le fait que** le support de l'élément de nettoyage (15) est pivotant et qu'un ressort de compression (10) ou un ressort spiral est prévu à cet effet.

12. Dispositif selon une ou plusieurs des revendications 1 à 11, **caractérisé par le fait que** l'un des contre-supports, à savoir la pièce extérieure (3), présente une découpe ou une fenêtre (14) dans la zone de laquelle l'élément de nettoyage est mobile.

13. Dispositif selon l'une des revendications 2 à 12, **caractérisé par le fait que** la pièce de type coulisseau (1) est disposée avec au moins un ressort (10) dans l'espace délimité par les deux contre-supports extérieurs (2, 3).

14. Dispositif selon la revendication 13, **caractérisé par le fait que** la pièce de type coulisseau (1) est fixée de manière mobile à l'un des deux contre-supports extérieurs (2, 3), p. ex. en prise dans une fente desdits contre-supports.

15. Dispositif selon l'une des revendications 2 à 13, **caractérisé par le fait qu'**un ressort (10) est formé sur la pièce de type coulisseau (1) elle-même.

16. Dispositif selon la revendication 15, **caractérisé par le fait qu'**il est formé un ressort (10) plat et méandriforme.

17. Dispositif selon la revendication 10, **caractérisé par le fait que** le ressort (23) formé d'un ruban élastique est logé dans une découpe latérale (24) de la pièce de type coulisseau (1).

18. Dispositif selon l'une des revendications 3 à 17, **caractérisé par le fait que** la pièce d'écartement (13) sert de guide pour la pièce de type coulisseau (1).

19. Dispositif selon la revendication 11, **caractérisé par le fait que** la pièce de type coulisseau (1) est conçue comme un levier tournant qui porte à son extrémité un élément de nettoyage et peut pivoter d'environ 20 à 30 degrés en gros transversalement à l'étendue longitudinale du dispositif.

20. Dispositif selon la revendication 19, **caractérisé par le fait que** le levier tournant s'appuie sur la pièce d'écartement par l'intermédiaire d'un ressort de compression plat (10) et comporte dans sa partie extérieure un élément d'arrêt (5) qui agit en combinaison avec une butée (4) du contre-support (2).

21. Dispositif selon la revendication 19, **caractérisé par le fait qu'**il est prévu un ressort spiral à la place d'un ressort de compression (10) pour l'entraînement du levier toumant.

22. Dispositif selon la revendication 1, **caractérisé par le fait que** la pièce de type coulisseau portant l'élément de nettoyage a une longueur telle qu'elle dépasse de la fente du lecteur et peut être déplacée de l'extérieur par un opérateur.
